# EUROPEAN PATENT APPLICATION

(11) **EP 3 572 898 A1**
(43) Date of publication of application: **27.11.2019**
(21) Application number: 18741397.6
(22) Date of filing: 19.01.2018
(51) Int. Cl.: G05D 1/02, B64C 39/02, B63B 35/73

(54) **TRACTION DEVICE USING DRONE**

(30) Priority: 19.01.2017 KR 20170009284
(71) Applicant: Cha, Young Cheon, Gwangju 61222 (KR)
(72) Inventor: Cha, Young Cheon, Gwangju 61222 (KR)
(74) Representative: Hübner, Gerd
(86) International application number: PCT/KR2018/000886
(87) International publication number: WO 2018/135896

(57) **Abstract**

The present invention relates to a traction device using a drone and, more specifically, to a traction device using a drone, the device being capable of towing, along the progressing direction of a drone and by the thrust of the drone, an operator operating a drone and a carrier on which the operator rides. The traction device using a drone, of the present invention, can be applied to a moving means and leisure activities by allowing a user operating a drone to move in a flying direction of the drone, thereby enabling utilization of the drone to increase. In addition, the traction device using a drone of the present invention has an ascending and descending operation unit and a forward and backward operation unit, which are respectively formed as a rotational type, such as that of a knob dial, so as to facilitate maintenance of a constant altitude and a constant speed of the drone.

## Description

### Technical Field

The present invention relates to a towing apparatus using a drone, and more specifically, to a towing apparatus using a drone which allows an operator who operates a drone and a carrier on which the operator rides to be towed by thrust of the drone in a moving direction of the drone.

### Background Art

Generally, a drone refers to an unmanned aerial vehicle that flies by inducement of radio waves.

The drone was initially invented for military purposes and developed from a method of dropping a bomb using a hot-air balloon into an unmanned bomber operated through radio control, is currently used for reconnaissance, surveillance, and antisubmarine attack, and is classified into a target drone, a reconnaissance drone, a surveillance drone, a multi-role drone, and the like according to purpose. Recently, the drone has been used for various private sectors, such as aerial photography, transportation, disaster prevention, security, and the like, other than the military purposes, and has been developed widely from a large fixed-wing unmanned vehicle for a military purpose to a tiny drone for a medical purpose.

The drone may be classified into a rotary wing drone, a fixed wing drone, and a tiltrotor drone according to an operational method. The rotary wing drone, which flies by lift generated while a propeller mounted on a rotating shaft rotates, is classified into a quadcopter, a hexacopter, an octocopter, and the like according to the number of propellers. The rotary wing drone is capable of vertical takeoff, freely changing a direction, and hovering at a predetermined altitude so as to have an advantage of easily capturing an image, thereby being mainly used by individuals or in the private sector. The fixed wing drone flies by lift generated by power of an engine or a propeller while a wing is fixed to a fuselage, and the tiltrotor drone is an aircraft that vertically takes off and lands or flies forward at high speed by vertically rotating engines and propellers on both ends of wings thereof. The fixed wing drone and the tiltrotor drone, which are mainly used for military purposes rather than commercial purposes, can fly at a high altitude, at high speed, and for long hours. Recently, as personal hobby activities for controlling flight of a drone and use of drone for purposes of transportation and image-capturing in the private sector have been increased, interest in a drone has been increased, and thus a method for further increasing the utilization of a rotary wing drone is required.

Korean Laid-open Patent Application No. 10-2016-0129788 discloses a bike with a tethered drone efficiently advertising a product or service of a user by attracting people's attention, but a user controls the flight of a drone or captures an image using a drone as hobby activities using a drone, and thus utilization of the drone is limited.

### Technical Problem

The present invention is directed to providing a towing apparatus using a drone which allows an operator who operates the drone to be towed in a flight direction of the drone on the ground, water, or in the air.

### Technical Solution

One aspect of the present invention provides a towing apparatus using a drone which includes a plurality of drones configured to fly by lift and thrust, a control unit gripped by a user and configured to control a flight direction and speed of the drone and operation of a propeller mounted in the drone according to operation of the user, a towing unit configured to connect the drone with the control unit so that the control unit is towed in a flight direction of the drone, and transfer an operational signal of the user, which is generated by the control unit, to the drone, and a carrier on which the user gripping the control unit rides and which moves in accordance with the control unit towed by the drone.

The towing apparatus using a drone may further include a detachment preventing unit mounted on the control unit and configured to fix an upper body and a lower body of the user so as to prevent the user, gripping the control unit, from escaping from the control unit when the control unit is towed by the drones.

The carrier may further include a lower body supporting unit configured to support and fix a lower body of the user to be moved in accordance with the user towed in accordance with the control unit.

The towing unit may include at least one transceiving cable configured to connect the drone with the control unit so that the operational signal generated by operation of the control unit by the user is transferred to the drone, and a first drone connection tube extending by an extension length of the transceiving cable so that the transceiving cable is installed therein, and having one side coupled with the control unit and the other side connected with the drone.

The towing unit may include a supporting member configured to connect the control unit with the carrier so that the control unit is positioned above the carrier and rotatably coupled with the control unit, a second drone connection tube extending a predetermined length from one side of the supporting member of the control unit to be connected with the drone, and at least one transceiving cable extending from the control unit to the second drone connection tube through the supporting member so that the operational signal generated by the operation of the control unit by the user is transferred to the drone.

The towing apparatus using a drone may further include a second power supply part formed to be put on a user's shoulder and connected with the control unit to supply power to the drone, and the towing unit may further include a power cable extending from the control unit to the drones so that power of the second power supply part is supplied to the drones, and installed in the first drone connection tube.

The control unit may include a rotating shaft mounted in the center part to be rotatable in the lateral direction, formed on an upper portion thereof, and hinge-coupled with an end of the first drone connection tube so that the first drone connection tube is rotatable in a vertical direction.

The towing apparatus using a drone may further include a supporting member configured to rotatably support the rotating shaft protruding downward from a lower surface of the control unit so that the control unit is positioned above the carrier, and having a lower portion coupled to of the carrier.

The control unit may include a rotation angle sensor configured to detect a rotational angular displacement about the supporting member by an external force applied by the user, and a control part configured to receive the signal detected by the rotation angle sensor and control a flight direction of the drone by the rotational angular displacement of the control unit.

The control unit may include left and right handle parts formed to be gripped by both hands of the user, a center part formed between the left and right handle parts, connected with the towing unit, and including a power switch configured to control supply of power of the drone through the towing unit, an ascending and descending operation unit installed between the center part and the left handle part and configured to control the ascent and descent of the drone, a lateral rotation operation unit installed adjacent to the ascending and descending operation unit and configured to control lateral rotation of the drone, a forward and backward operation unit installed between the center part and the right handle part and configured to control forward and backward movement of the drone, a lateral movement operation unit installed adjacent to the forward and backward operation unit and configured to control lateral movement of the drone, and a display part configured to display movement information, such as a movement direction, speed, altitude of the user, and a state of a battery mounted on the drone.

Each of the ascending and descending operation unit 24 and the forward and backward operation unit may control the altitude and speed of the drone in a stepwise manner and may be formed in a rotatable form to maintain a predetermined state.

The carrier may include at least one wheel which is in contact with the ground and rolls.

The carrier may include a carrier main body configured to support the user, and a plurality of rotary wings mounted in the carrier main body and configured to generate lift so that the carrier main body levitates above the ground.

The carrier may include a carrier main body configured to support the user, a plurality of rotary wings mounted in the carrier main body and configured to generate lift so that the carrier main body levitates above the ground, and a third power supply part installed in the carrier main body and configured to supply power to the drone through the supporting member, and the towing unit may further include a power cable extending to the second drone connection tube through the supporting member to be connected with the drone so that power of the third power supply part is transferred to the drone

The carrier may be formed in a plate form to slide on water or snow.

The towing apparatus using a drone may include a multi-signal transfer unit configured to transfer the operational signal to the drone so that the operational signal generated by operation of the control unit by the user is transferred to each of the plurality of drones.

The first drone connection tube may include a first main towing tube having one side hinge-coupled to the control unit, extending in a direction away from the control unit to maintain a predetermined distance between the drones and the user, and including the transceiving cable and the power cable installed therein, a plurality of branched tubes branched in a direction away from ends of the other sides of the first main towing tube to disperse the plurality of transceiving cables and the power cable, and extending so that the plurality of drones fly while being spaced at least a predetermined distance from each other, and flexible tubes extending a predetermined length from ends of the branched tubes, made of a bendable material, and connected with the drones.

The second drone connection tube may include at least one second main towing tube including the transceiving cable and the power cable installed therein, having one side connected with the supporting member to maintain a predetermined distance between the drone and the control unit, and extending in a direction away from the carrier, a plurality of branched tubes branched in a direction away from ends of the other side of the second main towing tube to disperse the plurality of transceiving cables and the power cable, and extending so that the plurality of drones fly while being spaced at least a predetermined distance from each other, and a flexible tube extending a predetermined length from an end of the branched tube, made of a bendable material, and connected with the drone.

### Advantageous Effects

Since the towing apparatus using a drone allows an operator who operates a drone to be moved in a flight direction of the drone, it can be applied to a moving unit and leisure activities, thereby increasing the utilization of a drone.

### Description of Drawings

FIG. 1 is a perspective view illustrating a towing apparatus using a drone according to a first embodiment of the present invention.
FIG. 2 is an enlarged perspective view illustrating a control unit in FIG. 1.
FIG. 3 is a block diagram of the towing apparatus using a drone in FIG. 1.
FIG. 4 is a perspective view illustrating a towing apparatus using a drone according to a second embodiment of the present invention.
FIG. 5 is a perspective view illustrating a towing apparatus using a drone according to a third embodiment of the present invention.
FIG. 6 is a perspective view illustrating a part of a towing apparatus using a drone according to a fourth embodiment of the present invention.
FIG. 7 is a perspective view illustrating a part of a towing apparatus using a drone according to a fifth embodiment of the present invention.
FIG. 8 is a block diagram of the towing apparatus using a drone in FIG. 7.
FIG. 9 is a perspective view illustrating a towing apparatus using a drone according to a sixth embodiment of the present invention.

### Modes of the Invention

Hereinafter, a towing apparatus using a drone according to exemplary embodiments of the present invention will be described in detail with reference to the accompanying drawings.

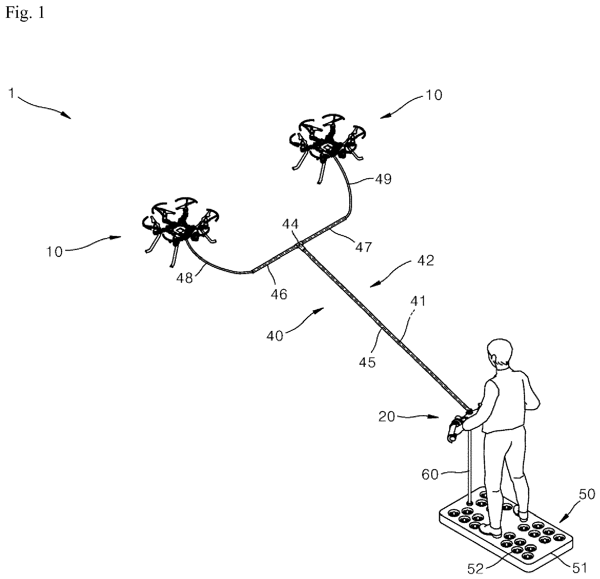

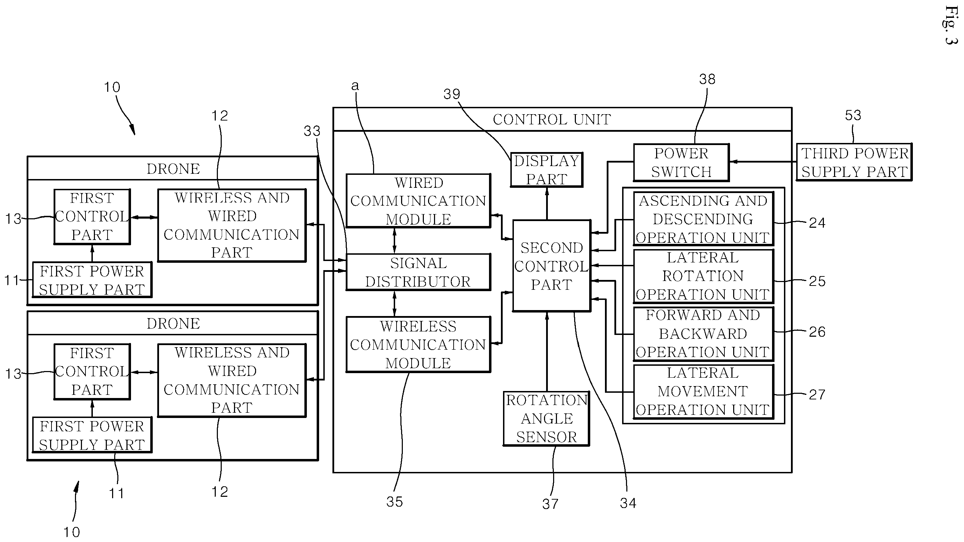

A towing apparatus 1 using a drone according to a first embodiment of the present invention is shown in FIGS. 1 to 3. The towing apparatus 1 is a device that moves an operator (hereinafter, referred to as a user), who operates a drone, by thrust of the drone in a flight direction of the drone.

The towing apparatus 1 includes a plurality of drones 10, a control unit 20 which is gripped by a user and controls a flight direction and speed of the drone and operation of a propeller mounted on the drone, a towing unit 40 which connects the drone 10 with the control unit 20 so that the control unit 20 is towed in the flight direction of the drone 10 and which transfers an operational signal generated by operation of the control unit 20 by the user and power supplied to the drone to the drone 10, a carrier 50 on which the user who grips the control unit 20 rides and which is movable in accordance with the control unit 20 towed by the drone 10, and a supporting member 60 supporting the control unit 20 so that the control unit 20 is laterally rotatable above the carrier 50.

A general drone refers to a flight vehicle flying by inducement of radio waves without a user riding thereon. The drone 10 according to the present invention, in which the control unit 20 is connected with a general drone through the towing unit 40 in a wired manner, includes a wireless and wired communication part 12 receiving an operational signal generated by operation of the control unit by the user and transferring information on a speed, altitude, and flight direction of the drone to the control unit 20, a first control part 13 controlling the flight of the drone 10 according to an operational signal transferred through the wireless and wired communication part 12, and a first power supply part 11 connected with the first control part 13 and supplying power of the drone. A charging-type battery is applied as the first power supply part 11.

The drone 10 according to the present invention is not limited to those illustrated in the drawings, and may be a flight vehicle with two to sixteen propellers. Further, in the towing apparatus 1 using a drone according to the present invention, two drones 10 are applied, but since lift and thrust may vary according to a size, the number, and the rotation number of propellers of the drone 10, the number of drones 10 required to move the user with the carrier 50 may vary.

The control unit 20 is gripped by the user and generates an operational signal for controlling a flight state, such as a direction, altitude, speed, and the like of the drone 10, by operation of the user.

The control unit 20 includes left and right handle parts 21 and 22 allowing a user to grip the control unit 20 with two hands of the user, a center part 23 formed between the left handle part 21 and the right handle part 22 and connected with the towing unit 40, an ascending and descending operation unit 24 installed between the left handle part 21 and the center part 23, a lateral rotation operation unit 25 which is installed adjacent to the ascending and descending operation unit 24 and controls lateral rotation of the drone 10, a forward and backward operation unit 26 installed between the center part 23 and the right handle part 22 to control forward and rearward movement of the drone 10, and a lateral movement operation unit 27 which is installed adjacent to the forward and backward operation unit 26 and controls lateral movement of the drone 10. The operational signal of the control unit 20 refers to a signal generated by operation of the ascending and descending operation unit 24, the lateral rotation operation unit 25, the forward and backward operation unit 26, and the lateral movement operation unit 27 by the user.

Unlike the illustrated examples, the ascending and descending operation unit 24 and the lateral rotation operation unit 25 are positioned between the right handle part 22 and the center part 23, and the forward and backward operation unit 26 and the lateral movement operation unit 27 are positioned between the left handle part 21 and the center part 23.

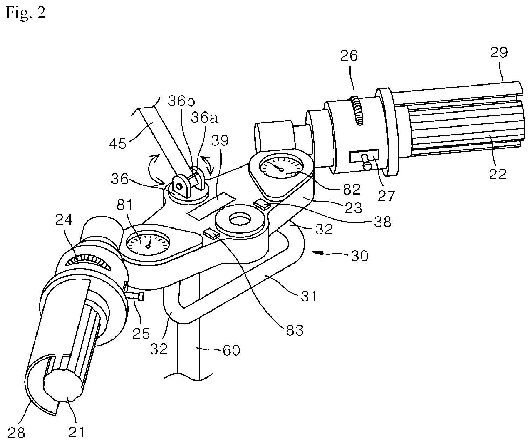

As illustrated in FIG. 2, in the control unit 20 according to the present invention, the user may operate each of the control units 24, 25, 26, and 27 using a thumb of the user while gripping the left handle part 21 and the right handle part 22 with a left hand and a right hand of the user so as to be towed by the drone 10, thereby allowing the user to operate each of the control units 24, 25, 26, and 27 while moving.

The ascending and descending operation unit 24 is capable of controlling a flight altitude of the drone 10 in a stepwise manner and is formed in a rotatable knob dial form to maintain a predetermined altitude. In the ascending and descending operation unit 24, a rotational direction away from the user is set as a direction of increasing its altitude, and a direction rotating toward the user is set as a direction of lowering its altitude.

Further, the forward and backward operation unit 26 is also capable of controlling a speed of each of the drones 10 in a stepwise manner and is formed in a rotatable knob dial form to maintain a predetermined speed. In the forward and backward operation unit 26, a rotational direction away from the user is a forward direction of the drone, and a direction rotating toward the user is a backward direction of the drone.

As shown in FIG. 2, the lateral rotation operation unit 25 and the lateral movement operation unit 27 are formed as a stick lever form laterally moving when an external force is applied, and include a torsion spring or a compression spring installed therein to return to the center thereof when the external force is released.

When the lateral rotation operation unit 25 is moved to the left by an external force applied by the user, the drone 10 is rotated in a counterclockwise direction, and when the lateral rotation operation unit 25 is moved to the right by an external force applied by the user, the drone 10 is rotated in a clockwise direction.

When the lateral movement operation unit 27 is moved to the left by an external force applied by the user, the drone 10 is moved in a left direction while flying, and when the lateral movement operation unit 27 is moved to the right by the external force applied by the user, the drone 10 is moved in a right direction.

Further, the control unit 20 includes first and second protecting members 28 and 29 extending in directions distanced from both ends of the center part 23, extending to front sides of the left handle part 21 and the right handle part 22, and protecting hands of the user gripping the left handle part 21 and the right handle part 22.

Further, as shown in FIG. 2, the control unit 20 may include a speedometer 81 connected with a second control part 34 and displaying a movement speed of the user, a tachometer 82 displaying the number of rotations of the propeller of the drone 10, and an emergency stopping button 83 connected with the second control part 34 and allowing the drone 10 to stop moving and to hover at the stopped spot.

The center part 23 includes a power switch 38 connected with a third power supply part 53 of the carrier 50 described below to supply power to the drone 10 through the towing unit 40 and turn on/off the control unit 20, and a multi-signal transfer part for transferring an operational signal to each of the drones so as to transfer operational signals generated by operation of the control unit 20 by the user to each of the plurality of drones 10.

The control unit 20 includes the second control part 34 for controlling the supply of power of the third power supply part 53 of the carrier 50 according to operation of the power switch 38, receiving an operational signal according to user operation of the ascending and descending operation unit 24, the lateral rotation operation unit 25, the forward and backward operation unit 26, and the lateral movement operation unit 27, and transferring the operational signal to a wired communication module a, and a wireless communication module 35 connected with the second control part 34 and capable of transceiving with the wireless and wired communication part 12 of the drone 10 when the operational signal of the control unit 20 cannot be transceived through the towing unit 40.

A signal multi-transfer unit includes a signal distributor 33 for distributing an operational signal of the control unit 20.

The signal distributor 33 transfers an operational signal to the wired communication module a or the wireless communication module 35 according to control of the second control part 34, and although not shown, may include an amplifier (not shown) for amplifying an operational signal, an analog-to-digital converter (not shown) for converting the signal amplified by the amplifier to a digital signal and transferring the digital signal to the wireless communication module 35, and an analog output part (not shown) for intactly outputting the signal amplified by the amplifier to transfer the signal to the wired communication module a. The analog-to-digital converter is set to be operated when an operational signal cannot be transferred to the wired communication module through the analog output part and is controlled by the second control part 34, and the center part 23 may include a separate switch (not shown) for controlling operation of the analog-to-digital converter and the analog output part.

However, the signal distributor 33 is not limited to the above-described configuration, and may separately include a general wired signal distributor and a general wireless signal distributor such as a digital signal distributor, an RF signal distributor, a T-junction distributor, and the like.

Although not shown, the signal multi-transfer unit may include a general remote control (RC) transceiver allowing a transceiver to be used for a plurality of drones per one channel in the same manner as time division multiple access. The signal multi-transfer unit may include at least one drone controller (not shown) connected with each of the plurality of drones 10 to communicate with the wireless and wired communication part 12 of each of the drones 10, for example Cortex M4-based FRDM-K64F, and a ground control system (G.C.S) (not shown) connected with the drone controller.

Further, the control unit 20 includes a rotating shaft 36 mounted in the center part 23 to be rotatable in the lateral direction and including a hinge coupling part 36a formed on an upper portion thereof and hinge-coupled with an end of the towing unit 40 so that the towing unit 40 is rotatable in a vertical direction, and a rotation angle sensor 37 detecting the rotational angular displacement of the control unit 20 rotated about the supporting member 60 or the rotating shaft 36 by an external force applied by the user. Although not shown, the rotating shaft 36 protrudes downward from a lower surface of the center part, is rotatably installed on an upper portion of the supporting member 60 described below, and is connected with an auxiliary gripping part 30 positioned on a lower side of the center part 23 and gripped by the user. As shown in FIG. 2, a pin 36b limiting a range of an angle of rotation of the towing unit is installed in an upper portion of the hinge coupling part 36a.

The rotating shaft 36 protruding from a lower surface of the control unit 20 includes an insertion groove (not shown) into which an upper end of the supporting member 60 described below is inserted and a bearing installed on an inner circumferential surface of an insertion groove to easily rotate about the supporting member 60. A thrust bearing is mounted between a lower end of the rotating shaft 36 and an upper end of the supporting member 60 such that the rotating shaft 36 may be mounted to be rotatable about the supporting member 60.

The auxiliary gripping part 30 includes an auxiliary gripping main body 31 extending from a lower side of the center part 23 in a direction in which the left handle part 21 and the right handle part 22 are spaced apart from each other to be gripped by the user, and fixed-coupled parts 32 extending from both ends of the auxiliary gripping main body 31 to an outer circumferential surface of the lower portion of the rotating shaft 36 protruding from a lower surface of the control unit, and fixed and coupled to the rotating shaft 36. The auxiliary gripping part 30 is connected with a lower end of the rotating shaft 36 and may rotate the towing unit 40 by rotating the rotating shaft 36 in a lateral direction.

Further, although not shown, the control unit 20 includes a display part 39 including various sensors required for traveling and flight, such as an acceleration sensor, a gyroscope sensor, a geo-magnetic sensor, a global positioning system (GPS) module, and the like, and connected with the second control part 34, and displaying information on a movement speed, direction, altitude, and azimuth of the user, an amount of remaining battery, and a low voltage notification, and the like through the second control part 34. The display part 39 may include an on-screen display (OSD) and a liquid-crystal display (LCD) module so that the information on direction and a movement speed, altitude, and azimuth of the user or the drone is displayed.

The second control part 34 of the control unit 20 is connected with the rotation angle sensor 37 to receive a signal detected by the rotation angle sensor 37 and transfers an operational signal to the drone 10 so that a flight direction of the drone 10 is rotated or moved by the rotational angular displacement of the control unit 20.

The towing unit 40 may include a transceiving cable 41, a first drone connection tube 42, and a power cable (not shown).

A plurality of transceiving cables 41, which connect the drone 10 with the control unit 20 to transfer the operational signal of the control unit 20 to the drone 10, include one sides connected with the signal distributor 33 and the other sides connected to the plurality of drones to transfer operational signals, distributed from the signal distributor 33, to the plurality of drones 10.

The power cable extends from the control unit 20 to the drone to transfer power of the third power supply part 53 of the carrier 50 described below to the drone. A plurality of power cables are provided to supply power of the third power supply part 53 to the plurality of drones.

The first drone connection tube 42 includes the transceiving cables 41 and the power cables installed therein and extends to maintain a predetermined distance between the drone 10 and the control unit 20. As shown in FIG. 2, the first drone connection tube 42 has one side rotatably installed in the rotating shaft 36 of the control unit 20 to easily change an altitude of the drone 10 and facilitate vertical movement of the drone 10.

The first drone connection tube 42 includes a first main towing tube 45, first and second branched tubes 46 and 47, and first and second flexible tubes 48 and 49.

The first main towing tube 45 has one side hinge-coupled to the control unit 20, extends in a direction away from the control unit 20, and includes the plurality of transceiving cables 41 and the power cables installed therein.

The first and second branched tubes 46 and 47 are branched in directions away from each other at an end of the other side of the first main towing tube 45 and include a plurality of transceiving cables and power cables installed therein. The first and second branched tubes 46 and 47 extend so that the plurality of drones 10 fly while being spaced apart at least a predetermined distance from each other.

A T-shaped bracket 44 coupled with the first and second branched tubes 46 and 47 is mounted on an end of the first main towing tube 45, and a bearing (not shown) may be mounted thereon so that the first and second branched tubes 46 and 47 are rotatable about the bracket 44. Referring to FIG. 1, one side of the bracket 44 is mounted parallel to a horizontal direction so that the first and second branched tubes 46 and 47 extend from an end of the other side of the first main towing tube 45 in the horizontal direction. However, unlike as illustrated, the bracket 44 may be mounted on one end of the first main towing tube 45 so that the first and second branched tubes 46 and 47 extend in a vertical direction and one sides thereof extend to face in a vertical direction.

The first and second flexible tubes 48 and 49 extend a predetermined length from ends of the first and second branched tubes 46 and 47 and are connected to the drones 10 spaced apart from each other. The first and second flexible tubes 48 and 49 are made of a bendable material to facilitate the flight of the drones 10.

Unlike as illustrated, the first drone connection tube 42 does not include the first and second flexible tubes 48 and 49, and thus the first and second branched tubes 46 and 47 may be directly connected to the drones 10.

The supporting member 60 may move the carrier 50 in accordance with the control unit 20 towed by the drones 10. The supporting member 60 rotatably supports the rotating shaft 36 protruding from a lower surface of the control unit 20 downward so that the control unit 20 is positioned above the carrier 50 and vertically extends so that a lower portion thereof is coupled to the carrier 50. The supporting member 60 may include a connection cable (not shown) installed therein and connecting the third power supply part 53 of the carrier 50 with the power switch 38 of the control unit 20.

The carrier 50 on which a user rides includes a carrier main body 51 supporting the user, a plurality of rotary wings 52 mounted in the carrier main body 51 and generating lift so that the carrier main body 51 levitates above the ground, and a third power supply part 53 installed in the carrier main body 51 and connected to the control unit 20 through the supporting member 60 to assist the supply of power to the drone 10. The third power supply part 53 may include a charging-type battery detachably installed in the carrier main body 51. For example, a general hoverboard may be applied as the carrier 50.

Although not shown, the carrier 50 includes a rotating shaft rotating with each of the rotary wings 52 and a driving motor for transferring a rotational force to the rotating shaft. The plurality of rotary wings 52 are rotated in a clockwise or counterclockwise direction to offset fuselage reaction torque so as to maintain the carrier 50 to be horizontal, and may generate uniform lift from the main body toward the ground even when the external force is applied.

The rotary wings 52 may be controlled through the power switch 38 of the control unit 20, and the carrier 50 may include a separate switch (not shown) for driving the rotary wings 52 installed in the carrier main body 51 thereof.

Operations and effects of the towing apparatus 1 using a drone having the above-described structure according to the first embodiment of the present invention will be described.

While a user standing up on the carrier 50 grips the control unit 20, the user drives the drone 10 and the rotary wings 52 by operating the power switch 38. When the user gradually increases the rotation number of propellers of the drone 10 and the rotary wings 52 by operating the ascending and descending operation unit 24 of the control unit 20, the drone 10 and the carrier 50 gently levitate above the ground. When the drone 10 and the carrier 50 approach a height that the user requires, the user increases thrust of the drone 10 by operating the forward and backward operation unit 26 of the control unit 20 while maintaining a predetermined height of the drone and the carrier 50, such that the carrier 50 flies forward at a constant speed. When an obstacle appears in front of the carrier 50, the user operates the lateral rotation operation unit 25 to avoid the obstacle by moving the carrier 50 in a left or right direction. In this case, the drones 10 fly to be spaced apart a predetermined distance from each other by the first and second branched tubes 46 and 47 extending to be spaced apart from each other. The user controls an altitude of the drones 10 using the ascending and descending operation unit 24, and moves the drones 10 by operating the forward and backward operation unit 26, the lateral rotation operation unit 25, and the lateral movement operation unit 27. When positions of the drones 10 are moved, the control unit 20 and the carrier 50 connected with the drones 10 by the towing unit 40 are towed in a movement direction of the drones 10.

The towing apparatus 1 using a drone according to the present invention may move the user who operates the drone 10 in a flight direction of the drone 10 and may be applied to a moving unit and leisure activities, and thus utilization of the drone is increased. In the towing apparatus 1 using a drone according to the present invention, each of the ascending and descending operation unit 24 and the forward and backward operation unit 26 is formed in a rotary dial form, such as a rotary knob dial, and thus a predetermined altitude and speed of the drone 10 can be easily maintained.

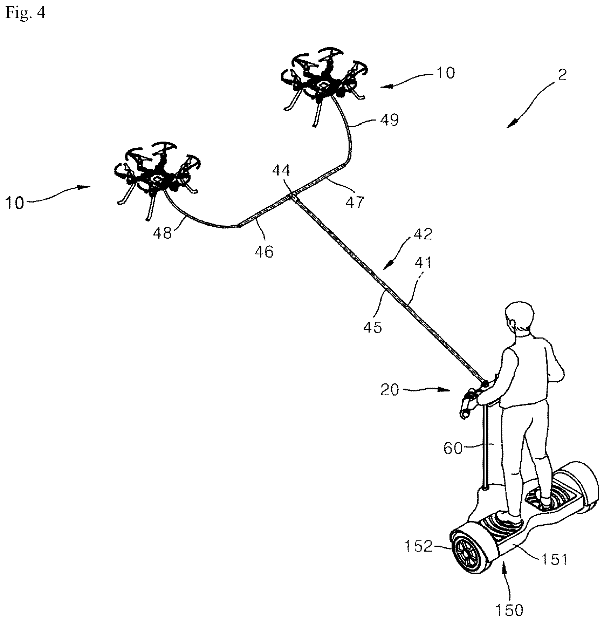

Meanwhile, FIG. 4 illustrates a towing apparatus 2 using a drone according to a second embodiment of the present invention. Components having the same functions as those in the above-illustrated drawings are represented by the same reference numerals.

The towing apparatus 2 using a drone according to the second embodiment of the present invention has the same configuration as the towing apparatus in the first embodiment of the present invention except the carrier 50. The towing apparatus 2 using a drone according to the second embodiment of the present invention includes a carrier 150 with at least one wheel which is in contact with the ground and rolls.

The carrier 150 includes a carrier main body 151 for supporting a user and rotary members 152 which are installed on both sides of the main body in parallel and are in contact with the ground and roll. The carrier 150 may include a third power supply part 53 installed in the main body 151 and assisting power supply to the drone through the supporting member 60. The number or shapes of rotary members 152 is not limited as long as the carrier 150 supports the user and rolls on the ground. For example, a roller skate, a skate board, and the like may be applied as the carrier 150, and a caterpillar other than a circular wheel may be applied as a rotary member 152. Further, in the exemplary embodiment of the present invention, the user rides on the carrier 150 while standing up, but unlike as illustrated in the drawings, the carrier 150 may be formed in a bike or bicycle form so that the user may ride while sitting or may include a seating part (not shown) formed in a chair form so that the user may sit in the carrier 150.

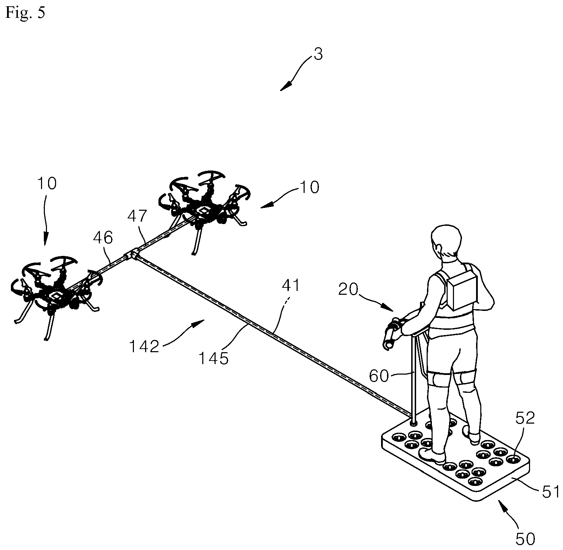

Meanwhile, FIG. 5 illustrates a towing apparatus 3 using a drone according to a third embodiment of the present invention. Components having the same functions as those in the above-illustrated drawings are represented by the same reference numerals. The towing apparatus 3 using a drone according to the third embodiment of the present invention has the same configuration as the towing apparatus 1 in the first embodiment of the present invention except a towing unit.

A towing unit 40 of the towing apparatus 3 using a drone according to the third embodiment of the present invention includes a transceiving cable 41, a second drone connection tube 142, a power cable (not shown), and a supporting member 60.

The supporting member 60 connects a control unit 20 with a carrier 50 so that the control unit 20 is positioned above the carrier 50. Meanwhile, the control unit 20 does not include the rotating shaft 36 according to the first embodiment of the present invention and is rotatably mounted on the supporting member 60.

The second drone connection tube 142 includes a second main towing tube 145 and first and second branched tubes 46 and 47. The second main towing tube 145 extends a predetermined length from one side of an outer circumferential surface of the supporting member 60 to be connected with the first and second branched tubes 46 and 47. Although not shown, the second main towing tube 145 includes a hollow part (not shown) formed therein so that the transceiving cable 41 and the power cable extend to a drone 10, and the hollow part communicates with an inner space (not shown) of the supporting member 60 so that the transceiving cable 41 and the power cable are connected with the control unit 20 through the supporting member 60. The inner space of the supporting member 60 is a space in which a connection cable (not shown) connecting the third power supply part 53 of the carrier 50 with the control unit 20 is installed.

In the towing apparatus 3 using a drone according to the third embodiment of the present invention, the drones 10 are respectively connected with the first and second branched tubes 46 and 47.

A rotation angle sensor 37 mounted on the control unit 20 detects an angle of rotation of the control unit 20 about the supporting member 60 and transfers the angle to a second control part 34, and the second control part 34 transmits a control signal through a multi-signal transfer unit, a wired communication module a, or a wireless communication module 35 to control a direction of the drone according to the detected signal of the rotation angle sensor 37.

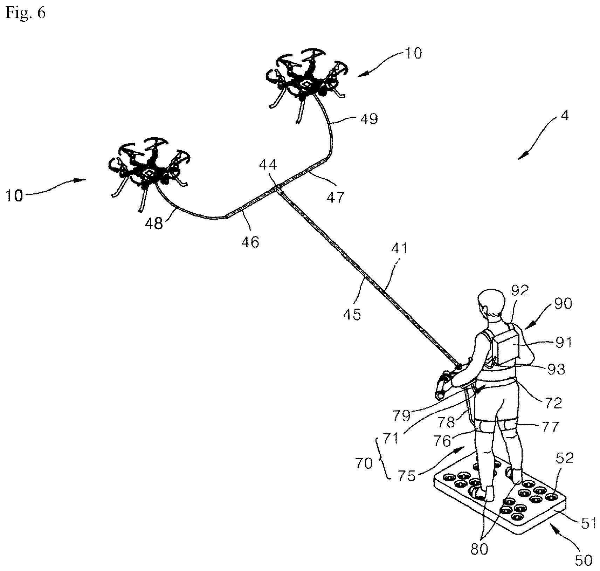

Meanwhile, FIG. 6 illustrates a towing apparatus 4 using a drone according to a fourth embodiment of the present invention. Components having the same functions as those in the above-illustrated drawings are represented by the same reference numerals.

The towing apparatus 4 using a drone according to the fourth embodiment of the present invention does not include the supporting member 60 of the structure of the towing apparatus of the first embodiment of the present invention, and a third power supply part 53 supplies power for driving rotary wings 52.

The towing apparatus 4 using a drone according to the fourth embodiment of the present invention further includes a detachment preventing unit 70, a lower body supporting unit 80, and a second power supply part 90.

The detachment preventing unit 70 prevents a user who grips a control unit 20 from escaping from the control unit 20 when the control unit 20 is towed by a drone 10. The detachment preventing unit 70 includes an upper body fixing part 71 and a lower body fixing part 75 which are mounted on the control unit 20 and fix an upper body and a lower body of the user, respectively.

The upper body fixing part 71 includes an upper body fixing belt 72 surrounding the upper body of the user and a first connection member (not shown) connecting the upper body fixing belt 72 with the control unit 20 and formed to maintain a predetermine distance between the control unit 20 and the upper body fixing belt 72. The lower body fixing part 75 includes first and second lower body fixing belts 76 and 77 surrounding a leg of the user, and second and third connection members 78 and 79 connecting the first and second lower body fixing belts 76 and 77 and maintaining a predetermined distance between the control unit 20 and the first and second lower body fixing belts 76 and 77.

The first to third connection members 78 and 79 (not shown), which are configured to maintain a predetermined shape to fix a position of the user at a predetermined distance from the control unit 20 so that the user may be actively towed according to change of a movement direction of the drone 10, may be made of plastic, a metal material such as carbon or aluminum. However, unlike as illustrated, a bendable wire may be applied as the first to third connection members 78 and 79 (not shown).

A carrier 50 includes a lower body supporting unit 80 mounted on a carrier main body 51 to be moved in accordance with the user towed in accordance with the control unit 20 and supporting and fixing a lower body of the user. The lower body supporting unit 80 may be formed in a belt form surrounding shoes and calves of a user or a slipper form with a closed front portion accommodating a top of the foot of the user, or may be a form in which boots used to ski or snowboard are fixed to the carrier 50.

The second power supply part 90 is formed to be put on a user's shoulder and is connected with the control unit 20 to assist the supply of power to the drone 10. The second power supply part 90 includes a battery 91, a shoulder strap 92 allowing the battery to put on a user's shoulder, and a battery power cable 93 connecting the battery 91 and the control unit 20.

Meanwhile, unlike as illustrated in FIG. 6, the carrier 150 includes a lower body supporting unit 80 that may be formed in a plate shape to enable sliding on the water or snow, such as water-ski boards or snowboards or may be a skateboard or a roller skate which is in contact with the ground and rolls.

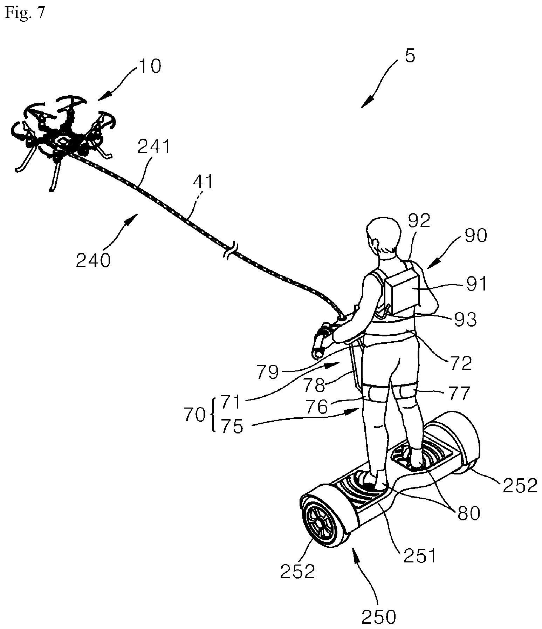

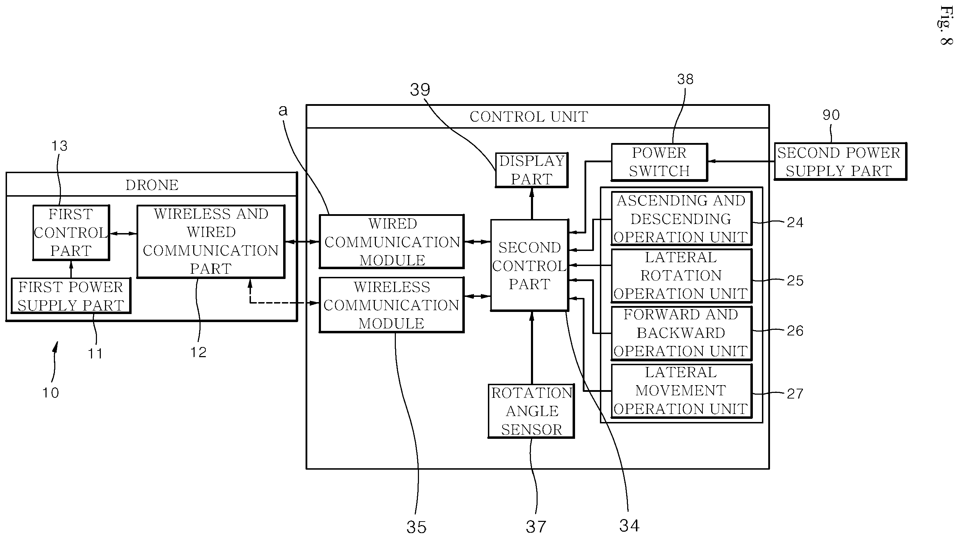

Meanwhile, FIGS. 7 and 8 illustrate a towing apparatus 5 using a drone according to a fifth embodiment of the present invention. Components having the same functions as those in the above-illustrated drawings are represented by the same reference numerals, and detailed description will be omitted.

The towing apparatus 5 using a drone according to the fifth embodiment of the present invention includes a drone 10, a bendable towing unit 240, a control unit 20, a detachment preventing unit 70, a second power supply part 90, and a carrier 250.

The towing unit 240 includes a flexible tube 241 made of a bendable material and having one side connected with the control unit 20 and the other side extending a predetermined length to be connected with the drone 10, and a transceiving cable 41 and a power cable extending to the inside of a flexible tube 241 in a length direction of the flexible tube in the control unit 20.

The carrier 250 includes a carrier main body 251 for supporting a user, rotary members 252 installed on both sides of the carrier main body 251 and capable of rolling on the ground, and a lower body supporting unit 80 fixed and mounted on the carrier main body 251.

Unlike the illustrated example, the number of rotary members 252 or the shape of rotary members 252 is not limited as long as the rotary member 252 supports the user and rolls on the ground. For example, a roller skate, a skate board, and the like may be applied as the carrier 250, and a caterpillar other than a circular wheel may be applied as the rotary member 252. Further, the carrier 250 may be formed in a bike or bicycle form or may include a seating part (not shown) formed in a chair form so that the user may ride while sitting.

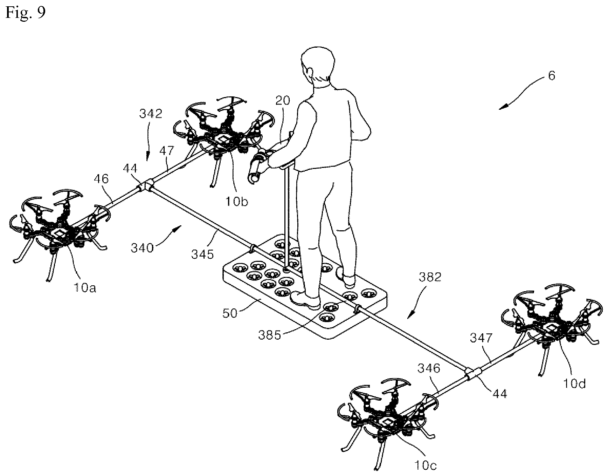

Meanwhile, FIG. 9 illustrates a towing apparatus 6 using a drone according to a sixth embodiment of the present invention. Components having the same functions as those in the above-illustrated drawings are represented by the same reference numerals, and detailed description will be omitted.

The towing apparatus 6 according to the present invention includes a control unit 20, a carrier 50, and a towing unit 340, and a plurality of drones are positioned in front of and behind the carrier.

The drones 10a, 10b, 10c, and 10d positioned in front of and behind the control unit 20 according to the sixth embodiment of the present invention tow the control unit 20, the carrier 50, and a user, cooperate on levitation of the carrier 50 by assisting lift of the carrier 50, and multiply various types of flight performance, such as lateral movement and sharp turns, by generating strong thrust.

The towing unit 340 of the towing apparatus 6 according to the present includes a transceiving cable (not shown), a power cable (not shown), a third drone connection tube 342, a fourth drone connection tube 382, and a supporting member 60.

A plurality of transceiving cables, which connect the drones 10 with the control unit 20 to transfer an operational signal of the control unit 20 to the drones 10, have one sides connected with a signal distributor 33 and the other sides connected with the plurality of drones 10a, 10b, 10c, and 10d so as to transfer operational signals, distributed from the signal distributor 33, to the plurality of drones 10. The power cable extends from the control unit 20 to each of the drones 10a, 10b, 10c, and 10d to transfer power of the third power supply part 53 of the carrier 50 to each of the drones 10a, 10b, 10c, and 10d. A plurality of power cables are provided to supply power of the third power supply part 53 to the plurality of drones 10a, 10b, 10c, and 10d. That is, the pluralities of transceiving cables and power cables are dispersed with the third drone connection tube 342 and the fourth drone connection tube 382 described below through the supporting member 60.

As shown in FIG. 9, the third drone connection tube 342 and the fourth drone connection tube 382 are connected to the supporting member 60, and extend in directions opposite to each other from the supporting member 60.

The third drone connection tube 342 includes the transceiving cable 41 and the power cables installed therein and extend toward to a front side of the control unit 20 so that the plurality of drones 10 are forwardly spaced apart a predetermined distance from the control unit 20.

The third drone connection tube 342 includes a third main towing tube 345 and first and second branched tubes 46 and 47. The third main towing tube 345 extends a predetermined length from one side of an outer circumferential surface of the supporting member 60 in a front direction of the carrier 50, and is connected with the first and second branched tubes 46 and 47 through a bracket 44. The third main towing tube 345 includes a hollow part, which is not shown, formed therein so that the transceiving cable and the power cable extend to the drones 10, and the hollow part communicates with an inner space (not shown) of the supporting member 60 so that the transceiving cable and the power cable are connected to the control unit 20 through the supporting member 60. The inner space of the supporting member 60 is a space in which a connection cable (not shown) connecting the third power supply part 53 of the carrier 50 with the control unit 20 is installed.

As shown in FIG. 9, a T-shaped bracket 44 coupled with the first and second branched tubes 46 and 47 is mounted on an end of the third main towing tube 345. A bearing (not shown) is mounted in the bracket 44 so that the first and second branched tubes 46 and 47 are rotatable about the bracket 44.

The fourth drone connection tube 382 includes the transceiving cable and the power cables installed therein and extends toward a rear side of the control unit 20 to maintain a predetermined distance rearward of the control unit 20.

The fourth drone connection tube 382 includes a fourth main towing tube 385 and third and fourth branched tubes 346 and 347. The fourth main towing tube 385 has one side connected with the other side of an outer circumferential surface of the supporting member and extending a predetermined length in a direction away from the third main towing tube 345 and the other side connected with the third and fourth branched tubes 346 and 347 through the bracket 44. In the same manner as the third main towing tube 345, the fourth main towing tube 385 includes a hollow part, which is not shown, so that the transceiving cable and the power cable extend to the drones 10 coupled to the third and fourth branched tubes 346 and 347. The hollow part of the fourth main towing tube 385 is connected with an inner space (not shown) of the supporting member 60 so that the transceiving cable and the power cable are connected with the control unit 20 through the supporting member 60.

The third and fourth branched tubes 346 and 347 are branched in directions opposite to each other from an end of the other side of the fourth main towing tube 385, and include the plurality of transceiving cables and the power cables installed therein. The third and fourth branched tubes 346 and 347 extend so that the plurality of drones 10 fly while being spaced at least a predetermined distance from each other.

As shown in FIG. 9, the T-shaped bracket 44 coupled with the third and fourth branched tubes is mounted on an end of the fourth main towing tube 385. A bearing (not shown) is mounted in the bracket 44 so that the third and fourth branched tubes 346 and 347 are rotatable about the bracket 44.

A branched tube coupling part (not shown) is provided on each of ends of the first to fourth branched tubes 46, 47, 346, and 347, and a drone coupling part (not shown) screw-coupled with the branched tube coupling part is provided in each of the drones. The branched tube coupling part and the drone coupling part include a female-threaded part or a male-threaded part formed thereon to be screw-coupled to each other. A connector (not shown) detachable from the drones may be provided at ends of the transceiving cables and the power cables.

Meanwhile, referring to FIG. 9, the bracket 44 coupled to the third and fourth main towing tubes 345 and 385 includes one side to which the first and second branched tubes 46 and 47 or the third and fourth branched tubes 346 and 347 are coupled and extend in a transverse direction and the other side mounted on the third and fourth main towing tubes 345 and 385. Unlike as illustrated, the first and second branched tubes 46 and 47 or the third and fourth branched tubes 346 and 347 extending away from the bracket may be formed to be connected with two drones 10. That is, the first to fourth branched tubes 46, 47, 346, and 347 may be formed in a branched shape such as a tuning fork shape.

Specifically, although not shown, the first to fourth branched tubes 46, 47, 346, and 347 include a bracket coupling tube (not shown) coupled to the bracket 44 and extending in a horizontal direction orthogonal to the third main towing tube 345 or the fourth main towing tube 385, and a plurality of first and second sub-branched tubes (not shown) branched from ends of the bracket coupling tube, spaced apart from each other in a front and rear direction, and extending to be parallel to an extending direction of the bracket coupling tube. The plurality of first and second sub-branched tubes extend in a direction in which one sides connected with ends of the bracket coupling part are spaced apart from each other, and may be formed in a curved form with a curvature to be symmetrical with respect to the bracket coupling tube to face a direction orthogonal to an extending direction of the third main towing tube 345 or the fourth main towing tube 385.

In the towing apparatus 6 using a drone according to the sixth embodiment of the present invention, the plurality of drones 10a, 10b, 10c, and 10d are disposed in front of and behind the carrier and generate strong thrust so as to efficiently tow the control unit 20, the carrier 50, and the user, and cooperate on levitation by assisting lift of the carrier 50, so as to improve flight performance such as lateral movement and sharp turns.

The towing apparatus using a drone according to the present invention allows a user who operates the drone 10 to move in a flight direction of the drone 10 so as to be applied to a movement unit and leisure activities, thereby increasing the utilization of the drone.

Further, the towing apparatus using a drone according to the present invention includes an ascending and descending operation unit 24 and a forward and backward operation unit 26 formed in a rotary dial form, such as a knob dial and the like, thereby easily maintaining a predetermined latitude and speed of the drone.

Particularly, the towing apparatus using a drone according to the present invention may transfer the same operational signal to a plurality of drones through a multi-signal transfer unit in a wired or wireless manner, thereby allowing the group flight of drones.

The above-described towing apparatus using a drone according to the present invention has been described with reference to the examples illustrated in the drawings, but these are only examples. It should be understood by those skilled in the art that various modifications and equivalent other examples may be made. Therefore, the scope of the present invention is defined by the appended claims.

## Claims

1. A towing apparatus using a drone, comprising:
a plurality of drones configured to fly by lift and thrust;
a control unit gripped by a user and configured to control a flight direction and speed of the drone and operation of a propeller mounted in the drone according to operation of the user;
a towing unit configured to connect the drone with the control unit so that the control unit is towed in a flight direction of the drone, and transfer an operational signal of the user, which is generated by the control unit, to the drone;
a carrier on which the user gripping the control unit rides and which moves in accordance with the control unit towed by the drone;
a second power supply part formed to be put on a user's shoulder and connected with the control unit to supply power to the drone; and
a multi-signal transfer unit configured to transfer the operational signal to each of the drones so that the operational signal generated by operation of the control unit by the user is transferred to each of the plurality of drones,
wherein the towing unit includes:
at least one transceiving cable configured to connect the drones with the control unit so that the operational signal generated by the operation of the control unit by the user is transferred to the drones;
a first drone connection tube extending by an extension length of the transceiving cable so that the transceiving cable is installed therein and having one side coupled with the control unit and the other side connected with the drone; and
a power cable extending from the control unit to the drones so that power of the second power supply part is supplied to the drones and installed in the first drone connection tube,
wherein the first drone connection tube includes:
a first main towing tube having one side hinge-coupled to the control unit, extending in a direction away from the control unit to maintain a predetermined distance between the drones and the user, and including the transceiving cable and the power cable installed therein;
a plurality of branched tubes branched in a direction away from ends of the other sides of the first main towing tube to disperse the plurality of transceiving cables and the power cable, and extending so that the plurality of drones fly while being spaced at least a predetermined distance from each other; and
flexible tubes extending a predetermined length from ends of the branched tubes, made of a bendable material, and connected with the drones.

2. The towing apparatus of claim 1, further comprising a detachment preventing unit mounted on the control unit and configured to fix an upper body and a lower body of the user so as to prevent the user, gripping the control unit, from escaping from the control unit when the control unit is towed by the drones.

3. The towing apparatus of claim 1, wherein the carrier includes a lower body supporting unit configured to support and fix a lower body of the user to be moved in accordance with the user towed in accordance with the control unit.

4. A towing apparatus using a drone, comprising:
at least one drone configured to fly by lift and thrust;
a control unit gripped by a user and configured to control a flight direction and speed of the drone and operation of a propeller mounted in the drone according to operation of the user;
a towing unit configured to connect the drone with the control unit so that the control unit is towed in a flight direction of the drone and transfer an operational signal of the user, which is generated by the control unit, to the drone;
a carrier on which the user gripping the control unit rides and which moves in accordance with the control unit towed by the drone; and
a multi-signal transfer unit configured to transfer the operational signal to the drone so that the operational signal by operation of the control unit by the user is transferred to each of the plurality of drones,
wherein the towing unit includes:
a supporting member configured to connect the control unit with the carrier so that the control unit is positioned above the carrier and rotatably coupled with the control unit;
a second drone connection tube extending a predetermined length from one side of the supporting member of the control unit to be connected with the drone; and
at least one transceiving cable extending from the control unit to the second drone connection tube through the supporting member so that the operational signal generated by operation of the control unit by the user is transferred to the drone,
the carrier includes:
a carrier main body configured to support the user;
a plurality of rotary wings mounted in the carrier main body and configured to generate lift so that the carrier main body levitates above the ground; and
a third power supply part installed in the carrier main body and configured to supply power to the drone through the supporting member,
the towing unit further includes a power cable extending to the second drone connection tube through the supporting member to be connected with the drone so that power of the third power supply part is transferred to the drone, and
the second drone connection tube includes:
at least one second main towing tube including the transceiving cable and the power cable installed therein, having one side connected with the supporting member to maintain a predetermined distance between the drone and the control unit, and extending in a direction away from the carrier;
a plurality of branched tubes branched in a direction away from ends of the other side of the second main towing tube to disperse the plurality of transceiving cables and the power cable, and extending so that the plurality of drones fly while being spaced at least a predetermined distance from each other; and
a flexible tube extending a predetermined length from an end of the branched tube, made of a bendable material, and connected with the drone.

5. A towing apparatus using a drone, comprising:
at least one drone configured to fly by lift and thrust;
a control unit gripped by a user and configured to control a flight direction and speed of the drone and operation of a propeller mounted on the drone according to operation of the user;
a towing unit configured to connect the drone with the control unit so that the control unit is towed in a flight direction of the drone and transfer an operational signal of the user, which is generated by the control unit, to the drone; and
a carrier on which the user gripping the control unit rides and which moves in accordance with the control unit towed by the drone,
wherein the towing unit includes at least one transceiving cable configured to connect the drone with the control unit so that the operational signal generated by operation of the control unit by the user is transferred to the drone, and a first drone connection tube extending by an extension length of the transceiving cable so that the transceiving cable is installed therein, and having one side coupled with the control unit and the other side connected with the drone, and the control unit includes:
left and right handle parts formed to be gripped by both hands of the user;
a center part formed between the left and right handle parts and connected with the towing unit;
a rotating shaft mounted in the center part to be rotatable in the lateral direction, formed on an upper portion thereof, and hinge-coupled with an end of the first drone connection tube so that the first drone connection tube is rotatable in a vertical direction;
a rotation angle sensor configured to detect a rotational angular displacement by which the rotating shaft is rotated about the center part by an external force applied by the user;
a control part configured to receive the signal detected by the rotation angle sensor and control a flight direction of the drone by the rotational angular displacement of the control unit; and
an auxiliary gripping part connected with the rotating shaft protruding downward from the center part and formed to be gripped by the user.

6. The towing apparatus of claim 5, further comprising a supporting member configured to rotatably support the rotating shaft protruding downward from a lower surface of the control unit so that the control unit is positioned above the carrier, and having a lower portion coupled to of the carrier,
wherein the rotation angle sensor detects a rotational angular displacement by which the control unit is rotated about the supporting member by an external force applied by the user.

7. The towing apparatus of claim 4, wherein the control unit includes:
a rotation angle sensor configured to detect a rotational angular displacement about the supporting member by an external force applied by the user; and
a control part configured to receive the signal detected by the rotation angle sensor and control a flight direction of the drone by the rotational angular displacement of the control unit.

8. The towing apparatus of claim 1, wherein the control unit includes:
left and right handle parts formed to be gripped by both hands of the user;
a center part formed between the left and right handle parts, connected with the towing unit, and including a power switch configured to control supply of power of the drone through the towing unit;
an ascending and descending operation unit installed between the center part and the left handle part and configured to control ascent and descent of the drone;
a lateral rotation operation unit installed adjacent to the ascending and descending operation unit and configured to control lateral rotation of the drone;
a forward and backward operation unit installed between the center part and the right handle part and configured to control forward and backward movement of the drone;
a lateral movement operation unit installed adjacent to the forward and backward operation unit and configured to control lateral movement of the drone; and
a display part configured to display movement information, such as a movement direction, speed, altitude of the user, and a state of a battery mounted in the drone.

9. The towing apparatus of claim 8, wherein each of the ascending and descending operation unit and the forward and backward operation unit controls the altitude and speed of the drone in a stepwise manner and is formed in a rotatable form to maintain a predetermined state.

10. The towing apparatus of claim 1, wherein the carrier includes at least one wheel which is in contact with the ground and rolls.

11. The towing apparatus of claim 1, wherein the carrier includes a carrier main body configured to support the user, and a plurality of rotary wings mounted in the carrier main body and configured to generate lift so that the carrier main body levitates above the ground.

12. The towing apparatus of claim 3, wherein the carrier is formed in a plate form to slide on water or snow.
